# EUROPEAN PATENT SPECIFICATION

(11) **EP 1 852 949 B1**
(45) Date of publication and mention of the grant of the patent: **02.12.2009**
(21) Application number: 06113562.0
(22) Date of filing: 05.05.2006
(51) Int. Cl.: H02G 15/18

(54) **Tubular terminal for a cable**
Rohrförmiger Kabelanschluß
Borne tubulaire pour câble

(43) Date of publication of application: 07.11.2007
(73) Proprietor: 3M Innovative Properties Company, St. Paul MN 55133-3427 (US)
(72) Inventor: Krabs, Raymond, 40547, Düsseldorf (DE); Lohmeier, Gerhard, 50937, Köln (DE); Zoltan Kis, Attila, 41462, Neuss (DE)
(74) Representative: Hilleringmann, Jochen

(56) References cited:
- EP-A- 0 435 569
- EP-A- 0 504 035
- EP-A- 0 541 000
- EP-A- 0 638 977
- EP-A- 0 966 780
- WO-A-92/14278
- WO-A-2004/091066
- WO-A-2006/002650
- DE-A1- 3 813 001
- DE-U1- 8 219 184
- US-A- 3 708 611

## Description

### BACKGROUND OF THE INVENTION

### Field of the Invention

The present invention relates to a tubular terminal for a medium or high voltage cable. Moreover, the present invention relates to a kit for connecting medium or high voltage cables. Furthermore, the present invention relates to an arrangement of at least three tubular terminals for medium or high voltage cables.

### Description of the Prior Art

It is generally known to use radially shrinkable sleeves for enclosing an electrical cable connected to another electrical cable or a stop end. An example of a known radially shrinkable sleeve for covering cable terminations either of cable connectors or stop ends is described in EP-B-0 435 569. The shrinkable sleeve comprises a dielectric material as an intermediate insulating layer, an electric field control inner layer combined with a partially coated inner conductive layer, and an electrically conducting outer layer. Such a multi-layer sleeve is preferably made by extrusion and preferably comprises silicone or EPDM.

When making cable splices or cable end terminations by means of a known radially shrinkable sleeve it is necessary that on one side of the connector a free space is provided (parking position), which corresponds to the complete length of the shrinkable sleeve. After the cable connection is established, the shrinkable sleeve is centered over the cable connection and is then shrunk down either by the application of heat by the removal of an external or internal support maintaining the shrinkable sleeve in a radially extended state. EP-B-0 541 000 discloses a radially shrinkable sleeve which in its radially expanded state is held by two removable support cores located adjacent each other. Another radially shrinkable sleeve having individual support cores for different sections of the sleeve is disclosed in EP-B-0 966 780. In this known assembly, different sections of the sleeve are concentrically arranged by folding back the sleeve, wherein the individual sections are maintained in their respective radially expanded states by means of removable support cores or similar support elements.

One problem with the known radially shrinkable sleeves is that the user has to arrange the sleeve over the cable connection in a centered manner. EP-B-1 158 639 discloses an electric connector element to which two cables to be connected can be attached by means of screws. The conductors of the cables to be connected are inserted into the connector element and are fixed therein by fastening screws. The connector element is encompassed by an elastic sleeve which extends beyond the two terminal ends of the connector element for surrounding the cables when attached to the connector element. The elastic sleeve in its portion encompassing the connector element is provided with two openings for allowing access to the fastening screws. When the screws are fastened, the two openings are closed by sealing caps. In the known design there is the risk that humidity enters along the caps into the tubular sleeve.

Finally, from DE-A-29 39 600 and DE-A-38 13 001 it is known to use plug-and-socket connectors for connecting medium or high voltage cables, wherein, after having established the electrical connection, a shrinkable sleeve is placed onto the cable connection.

Pre-assembled cable connectors are disclosed in U.S.-A-3,708,611 and WO-A-92/14278. These known connectors are provided with crimp sockets for connecting the cables wherein the crimp sockets are surrounded by insulating sleeves. In the connector according to U.S.-A-3,708,611 the insulating sleeve is radially shrinkable.

From DE-U-82 19 184 a connector for coaxial cables is known which is surrounded by a heat shrinkable sleeve which at its inner side is coated with a heat melt adhesive.

Another pre-assembled cable connector is disclosed in WO-A-2004/091066. The socket of this known connector is surrounded by a sleeve of insulating material which at its outer side is provided with a conductive layer axially extending beyond the opposite ends of the sleeve. A shrinkable outer wall is arranged around the sleeve of insulating material onto which it is shrunk down. Between the shrinkable outer wall and the inner sleeve of insulating material a separated flexible conductive sleeve is arranged. The shrinkable outer wall is made of a heat shrinkable material. The shrinkable outer wall at its inner side is provided with resistance wires which are heated when an electric current flows therethrough. Due to the heat the shrinkable outer wall can shrink down on the opposite end sections of the cables connected by the connector.

EP-A-0 504 035 discloses a conventional cable connector having a crimpable socket connector for connecting the conductors of two cables. A shrinkable outer sleeve is arranged around the connector and associated cable portions. This sleeve has to be placed around one of the two cables to be connected prior to the crimping of the connector. Thereafter, the sleeve has to be displaced so as to cover the crimped socket connector and adjacent cable portions onto which the opposite axial ends of the sleeve can shrink down when removing support cores arranged within the opposite axial ends of the sleeve for maintaining the same in an expanded state.

A further known shrinkable sleeve for a cable connector is disclosed in WO-A-2006/002650. The shrinkable tubular sleeve has end portions folded back and supported by removable cores.

Accordingly, there is a need for an improved cable terminal either in a cable-to-cable connection or stop end application, in particular for medium or high voltage cables, wherein the terminal for the cable is provided with an improved sealing function and allows for facilitated application.

### SUMMARY OF THE INVENTION

The present invention provides a pre-assembled tubular terminal for a medium or high voltage cable, comprising the features of claim 1. The other claims relate to individual embodiments of the invention.

The tubular terminal for a cable according to the invention comprises a first connector for connecting to at least one mating second connector. The second connector is adapted to be connected to a cable and to be engaged with the first connector for making electrical contact therewith. A shrinkable sleeve surrounds the first connector and comprises first and second tubular portions. Within the first tubular portion the shrinkable sleeve is fixedly arranged around the first connector, while the second tubular portion of the shrinkable sleeve extends from the first tubular portion and, accordingly, beyond the at least one terminal end of the first connector, at which terminal end the mating second connector can be connected to the first connector. The second tubular portion of the shrinkable sleeve is adapted to extend beyond the at least one terminal end of the first connector for covering the mating second connector and the cable attached thereto when the second connector is connected to the at least one terminal end of the first connector. The shrinkable sleeve comprises an outer layer of an electrically insulative material and an inner layer of an electrically conductive or semi-conductive material.

Accordingly, in the present invention the shrinkable sleeve completely and integrally encompasses the first connector. The first connector can be connected, by means of a plug-socket-interface, to the second connector. Therefore, the electrical contact between both connectors is established by plugging the one connector into the other connector. No screws or similar fastening elements to be externally accessible are necessary to establish the electrical contact between both connectors. Therefore, within its first tubular portion fixedly and integrally arranged around the first connector, the shrinkable sleeve provides a completely closed seal around the first connector. Since the shrinkable sleeve is pre-assembled with the first connector in that it is shrunk down onto the first connector, its position relative to the first connector always is accurate and exact as is necessary for the respective application of the pre-assembled tubular terminal as a cable-to-cable connection or a cable-to-stop end connection.

The first connector of the tubular terminal according to the invention may have one or more terminal ends configured sockets or plugs or both, i.e. one terminal end comprises a socket while another terminal end comprises a plug. The first connector typically comprises two terminal ends for connecting to two mating second connectors or for connecting to one mating second connector and a stop end element, respectively. The first connector may also be a branch connector. Further, in this application the connections between the first connector and the at least three mating connectors are configured as plug-and-socket connections. To ensure that a socket-and-plug connection is capable of carrying high electric currents, the prior art offers various contact techniques as e.g. disclosed in EP-A-0 716 474, DE-A-38 13 001, and DE-A-29 39 600.

The mechanical and electrical connection between a cable and the mating second connector, which in turn is to be connected to the first connector, according to one embodiment of the present invention, is realized by crimping or fastening screws or similar fastening elements. Preferably, the fastening screws are configured as shearable screws. Examples of fastening elements suitable for the connection between a cable (or a stop end element) and a second connector are disclosed in WO-A-95/25229, WO-A-96/31706, EP-B-0 470 388, EP-B-0 688 960, EP-B-0 692 643, EP-A-0 769 825, EP-B-0 819 222, EP-B-0 984 176, and US-A-6 045 373.

In the tubular terminal of the present invention, a cable can very easily be connected to the first connector. The first connector is fixedly connected and arranged within the shrinkable sleeve. A cable attached to a mating second connector can be easily connected to the first connector in that the mating second connector is inserted into the second tubular portion of the shrinkable sleeve so as to make electrical connection with the first connector by simply plugging in the second connector into the first connector, or *vice versa.* Accordingly, the shrinkable sleeve does not need a parking position or any free space on one of the sides of the first connector. If the pre-assembled tubular-terminal is used for connecting two electric cables, both cables, with their associated mating second connectors attached, are inserted from opposite sides into the respective second tubular portions of the shrinkable sleeve or shrinkable sleeves. Namely, if the first connector is provided with two terminal ends at its opposite ends, the respective second tubular portions extend beyond both terminal ends of the first connector. As an alternative, two shrinkable sleeves overlapping each other can be fixedly arranged on the first connector with their respective second tubular portions extending beyond the terminal ends of the first connector.

Generally, both heat and cold shrinkable sleeves can be used for the pre-assembled tubular terminal according to the invention. However, in order to avoid the application of heat for shrinking down the sleeve, cold shrinkable materials are preferred for the sleeve. These materials are generally known in the art, and preferably silicone or EPDM is used. In case of a cold shrinkable sleeve, the at least one second tubular portion of the sleeve is held in a radially expanded state by means of a support removable from the second tubular portion. This support can be arranged inside the second tubular portion or outside of the second tubular portion for holding the second tubular portion of the shrinkable sleeve in a radially expanded state. Suitable supports are generally known to those skilled in the art. In particular, it is known to use at least one core adapted to be inserted into the shrinkable sleeve for holding it in a radially expanded state, and removed from the shrinkable sleeve for shrinking down the sleeve. In the present invention, the core is used to hold the second tubular portion in a radially expanded state. Typically, the core comprises a helically wound ribbon wherein the ribbon at an axial end of the core proximal the terminal end of the first connector is adapted to be removed from the second tubular portion of the shrinkable sleeve by tearing the ribbon out of an axial end of the core facing away from the terminal end of the first connector, thereby separating the ribbon from the remainder of the core winding by winding. Examples for various supports as well as cores for holding the second tubular portion in a radially expanded state are disclosed in DE-A-39 43 296, DE,A-42 33 202, WO-A-95/11542, WO-A-95/318 845, EP-A-0 291 213, EP-A-0 399 263, EP-A-0 500 216, EP-A-0 631 117, EP-A-0 631 357, EP-A-0 702 444, EP-B-0 966 780, US-A-3 515 798, US-A-4 135 553, US-A-4 179 320, US-A-4 503 105, US-A-4 656 070, US-A-5 098 752, and US-4 585 607.

In another embodiment of the present invention, the second tubular portion of the shrinkable sleeve is held in its radially expanded state by at least two cores arranged adjacent to each other. These two cores can be separated or flexibly connected in order to provide bendability of the second tubular portion of the shrinkable sleeve for facilitating the connection between the first and second connectors. The at least two cores may have different inside diameters, which further may facilitate the application and use of the pre-assembled tubular terminal according to the present invention.

For a cable splice and cable stop end application it is normally necessary to use two shrinkable sleeves arranged concentrically and one above the other. The first or inner shrinkable sleeve covers the first connector, any mating second connector and the insulation layer around the conductor of the cable or cables. The first shrinkable sleeve is normally provided with the field control electrode layers which are electrically conductive or semiconductive. Around the first or inner shrinkable sleeve there is arranged the second or outer shrinkable sleeve which extends axially beyond the first shrinkable sleeve and is shrunk down onto the outer jacket of the cable or cables. This configuration is used for medium and high voltage cables, wherein an electrically conductive layer of e.g. metal material underneath the outer shrinkable sleeve electrically connects the metallic screen and outer electric shielding layers underneath the outer jacket of the cable or cables. The second shrinkable sleeve is arranged around the first shrinkable sleeve and extends beyond the second tubular portion of the first shrinkable sleeve.

In one embodiment of the present invention, the second shrinkable sleeve comprises a first tubular portion fixedly arranged and, in particular, shrunk down onto the first tubular portion of the first shrinkable sleeve, while a second tubular portion of the second shrinkable sleeve is arranged around the second tubular portion of the first shrinkable sleeve and is adapted to extend beyond the at least one terminal end of the first connector for covering the second tubular portion of the first shrinkable sleeve as well as an outer jacket of the cable. The second shrinkable sleeve can be made from cold or heat shrinkable materials. The second shrinkable sleeve is held along its complete length or along at least subportions of its second tubular portion in a radially expanded state by means of a support arranged inside or outside the second shrinkable sleeve and removable from its second tubular portion. The support used for the second shrinkable sleeve can generally be of the same design and configuration as explained and described above with regard to the support for the second tubular portion of the first shrinkable sleeve.

In one embodiment of the present invention, the second shrinkable sleeve may comprise two sleeve portions overlapping each other on or around the first tubular portion of the first shrinkable sleeve.

In another embodiment of the present invention, the second shrinkable sleeve has a second tubular portion within which the second shrinkable sleeve is wound up so as to form a circumferentially extending roll arranged on the first tubular portion of the first shrinkable sleeve and/or its second tubular portion. If the first shrinkable sleeve comprises a third tubular portion, the second shrinkable sleeve may also comprise a third tubular portion which is wound up similar to its second tubular portion and is arranged on the first tubular portion and/or the third tubular portion of the first shrinkable sleeve. Each circumferentially extending roll of the second shrinkable sleeve may be fixed and secured so as to prevent the roll from unwinding. In particular, if the second (and third, if provided) tubular portion of the first shrinkable sleeve is held in a radially expanded state, the widening section between the first and second (and the first and third) tubular portions of the first shrinkable sleeve will prevent or will help to prevent the roll or rolls from inadvertently unwinding.

In a further embodiment of the present invention, the tubular terminal may be pre-assembled in that the first connector is arranged in the first tubular portion of the (first) shrinkable sleeve prior to the use of the tubular terminal for connecting a cable.

### BRIEF DESCRIPTION OF THE DRAWINGS

A full and enabling disclosure of the present invention, including the best mode thereof, enabling one of ordinary skill in the art to carry out the invention, is set forth in greater detail in the following description, with reference to the accompanying drawings in which
- Fig. 1: is a cross-sectional view of a first embodiment of a pre-assembled tubular terminal for electrically connecting two cables,
- Fig. 2: is a cross-sectional view of the device according to Fig. 1 with the two cables electrically connected to each other, but with the shrinkable sleeve in its second tubular portions still held in radially expanded state,
- Fig. 3: is a cross-sectional view of a complete cable splice with an inner sleeve shrunk down onto the cable connector, and the inner insulating layers of the cables and an outer sleeve shrunk down onto the inner sleeve as well as onto the outer jackets of the cables,
- Fig. 4: shows a cross-sectional view of another embodiment of the present invention having two individual cores for supporting each of the respective second tubular portions of the shrinkable sleeve,
- Fig. 5: shows a third embodiment of the present invention with an inner sleeve and an outer sleeve shrunk onto the inner sleeve and having end subportions folded back so as to face each other and held in a radially expanded state by separate supports,
- Figs. 6 to 10,: show individual further embodiments of various combinations of a pre-assemhled tubular terminal for a cable splice having an inner sleeve and an outer sleeve, wherein the outer sleeves have different configurations,
- Fig. 11: shows a further embodiment of a combination of a pre-assembled tubular terminal for a cable splice including an outer sleeve, wherein the inner sleeve comprises two support cores for each of its second tubular portions, and the outer sleeve within the separating planes of the respective pairs of support cores for the inner sleeve is folded back with the folded-back subportions of the second or outer sleeve being held in a radially expanded state by separate support cores,
- Fig. 12: is a cross-sectional view of a pre-assembled tubular terminal for a branched-off cable splice,
- Fig. 13: is a cross-sectional view of a pre-assembled tubular terminal for a cable stop end application with an inner and an outer shrinkable sleeve completely shrunk down onto the cable and stop end element,
- Fig. 14: is a cross-sectional view of a further embodiment of a pre-assembled tubular terminal for a cable having a connector with a socket terminal end and a plug terminal end,
- Fig. 15: is still a further embodiment of a pre-assembled tubular terminal for a cable with a connector having plugs at its two terminal ends,
- Fig. 16: is a further embodiment of a pre-assembled tubular terminal for a cable splice according to the invention, with an outer shrinkable sleeve wound up at its opposite ends so as to provide two circumferentially extending rolls or coils arranged on the first tubular portion of the inner shrinkable sleeve, with a metallic tubular netting arranged between the rolls and the shrinkable sleeve and axially gathered up,
- Fig. 17: is a isometric view of an arrangement of three tubular terminals for connecting a three-phase cable arrangement, and
- Fig. 18: is a cross-sectional view taken along line XVIII-XVIII of Fig. 17.

### DESCRIPTION OF PREFERED EMBODIMENTS

Hereinbelow diverse embodiments of the present invention are described and shown in the drawings wherein like elements are provided with the same reference numerals,

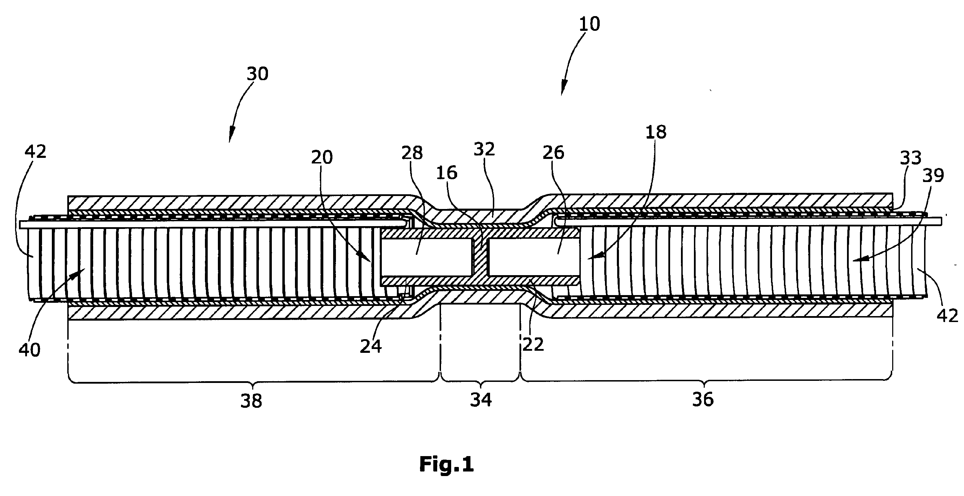

Figs. 1 to 3 show a first embodiment of a tubular terminal according to a pre-assembled tubular terminal 10 for a cable splice for connecting two medium or high voltage cables 12, 14. The pre-assembled tubular terminal 10 comprises a first connector 16 having two terminal ends 18,20 on its opposite sides. These terminal ends 18,20 comprise sockets 22,24 defining receiving spaces 26,28. Accordingly, the first connector 16 in this embodiment is a socket connector. In the drawings the tubular terminals are shown in a pre-assembled state which as such relates to a preferred embodiment of the invention.

The first connector 16 is arranged within a (first) shrinkable sleeve 30 having a dielectric layer 32 of e.g. silicone or EPDM with an inner layer 33 which is electrically conductive or semiconductive. Those shrinkable sleeves 30 which can be made from heat or cold shrinkable materials are generally known to those skilled in the art.

The shrinkable sleeve 30 comprises a first tubular portion 34 and second and third tubular portions 36,38 arranged on both sides of the first tubular portion 34. Within its first tubular portion 34, the sleeve 30 is fixedly connected to the first connector 16 such that, in this embodiment, the shrinkable sleeve 30 with its first tubular portion 34 is shrunk down on the first connector 16. The second and third tubular portions 36,38 extend beyond the second and third terminal ends 18,20 and are held in a radially expanded state by means of support cores 39,40. Each support core 39,40 comprises a helically wound ribbon 42, wherein the ribbon 42, at an axial end of the respective support core 39,40 proximal the respective terminal end 18,20 of the first connector 16, is adapted to be removed from the respective second or third tubular portion 36,38 of the shrinkable sleeve 30 by pulling the ribbon 42 out of the axial end of the respective support core 39,40 facing away from the terminal end 18,20. Thereby, the ribbons 42 are separated winding by winding from the remainder of the respective support cores 39,40. This support core technique is generally known to those skilled in the art.

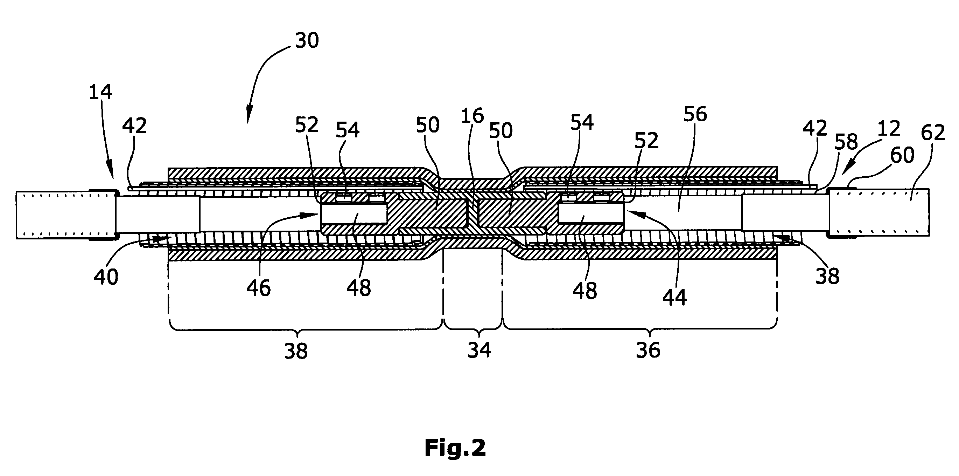

For connecting the two cables 12,14 to the first connector 16, mating second and third connectors 44,46 are attached to the respective conductors 48 of the cables 12,14. As shown in Fig. 2, each of the second and third connectors 44,46 comprises a plug 50 to be inserted into the sockets 22,24 of the first connector 16 and receiving spaces 52 for receiving the cable conductors 48. After insertion into the receiving spaces 52, the conductors 48 can be fixed, i.e. mechanically and, accordingly, electrically connected to the second and third connectors 44,46 by means of shearable screws 54 or by means of crimping the portions of the second and third connectors 44,46 surrounding the cable conductors 48.

For connecting the cables 12 and 14 their various layers have to be peeled off in a manner known to those skilled in the art. In particular, an inner insulating layer 56 has to be peeled off so as to expose the conductor 48 at the end of each cable 12,14. Also, a conductive cable screen 58 surrounding the cable insulation layer 56, a metallic cable screen 60 arranged around the conductive cable screen 58 and an outer cable jacket 62 are peeled off accordingly as is generally known in the field of medium or high voltage cables. When the second and third connectors 44,46 are attached to the conductors 48 of the cables 12,14, the cables 12,14 are inserted from opposite sides into the sleeve 30 until the second and third connectors 44,46 are connected to the first connector 16. For this procedure, no parking space is necessary for the sleeve 30 on one of the sides of the first connector 16.

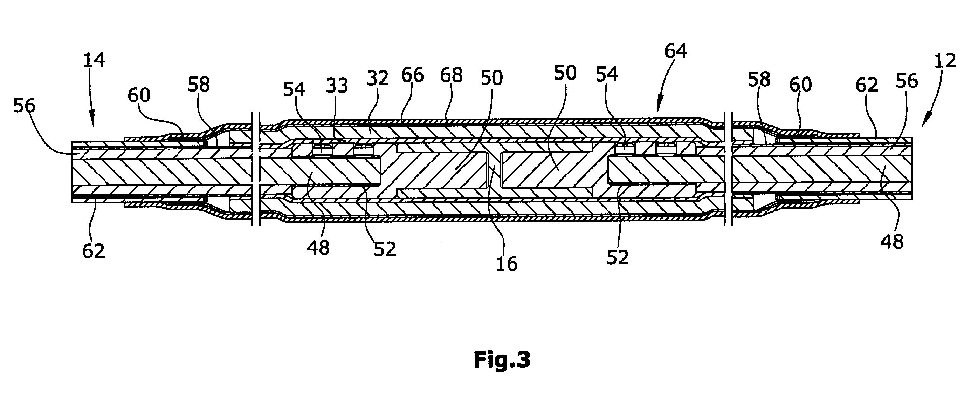

When the connectors are fit together as shown in Fig. 2, by pulling out the ribbons 42 the support cores 39,40 are removed from the second and third tubular portions 36,38 of the shrinkable sleeve 30. When pulling at a ribbon 42, the respective tubular portion of the shrinkable sleeve starts shrinking down on the first connector and its respective terminal end 18,20, respectively. This is advantageous in that the air within the radially expanded tubular portions of the sleeve 30 will be forced out of the shrinkable sleeve starting at the inner axial end of the respective second or third tubular portion so that no air will be trapped within the second and third tubular portions 36, 38 of the shrinkable sleeve when these portions are shrunk down. Thereafter, a second shrinkable sleeve 64 is placed onto the (first) shrinkable sleeve 30. This second shrinkable sleeve 64 comprises an outer dielectric layer 66 which surrounds a metallic screen sleeve 68 arranged between the inner shrinkable sleeve 30 and the outer shrinkable sleeve 64. The inner shrinkable sleeve 30 may include an outer conductive layer (not shown). The fully mounted cable splice comprising all the elements described before is shown in Fig. 3. By means of the inner electrically conductive layer 33 of the sleeve 30 which is an inner stress control layer, the cable conductive screens or shielding layers 58 of the two cables 12,14 are connected. The cable metallic screens 60 of the two cables 12,14 are electrically connected by means of the metallic screen sleeve 68 arranged underneath the outer or second shrinkable sleeve 64.

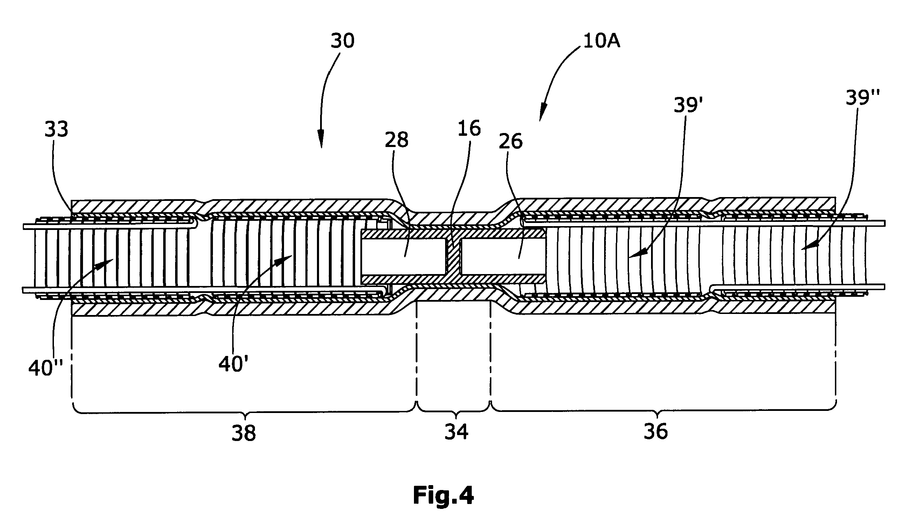

Fig. 4 shows an alternative embodiment of the pre-assembled tubular terminal 10 according to Fig. 1. In the embodiment according to Fig. 4, the pre-assembled tubular terminal 10A differs from that shown in Figs. 1 to 3 in that each of the support cores 39 have two individual core elements 39',39",40',40". Each of these core elements comprises helically wound ribbon which can be pulled out individually, as shown in Fig. 4. This design offers a certain bendability towards the second and third tubular portions 36,38 of the shrinkable sleeve 30, which facilitates the insertion of the cables to be connected into the opposite ends of the shrinkable sleeve 30. Instead of having two separate core elements for each of the tubular portions 36 and 38 of the shrinkable sleeve 30, both core elements may be helically wound by means of one and the same ribbon such that the individual windings of the ribbon within each of the core elements are connected to each other, while the ribbon within its section connecting the two core elements on its lateral sides is separated from the respective first windings of the adjacent core elements.

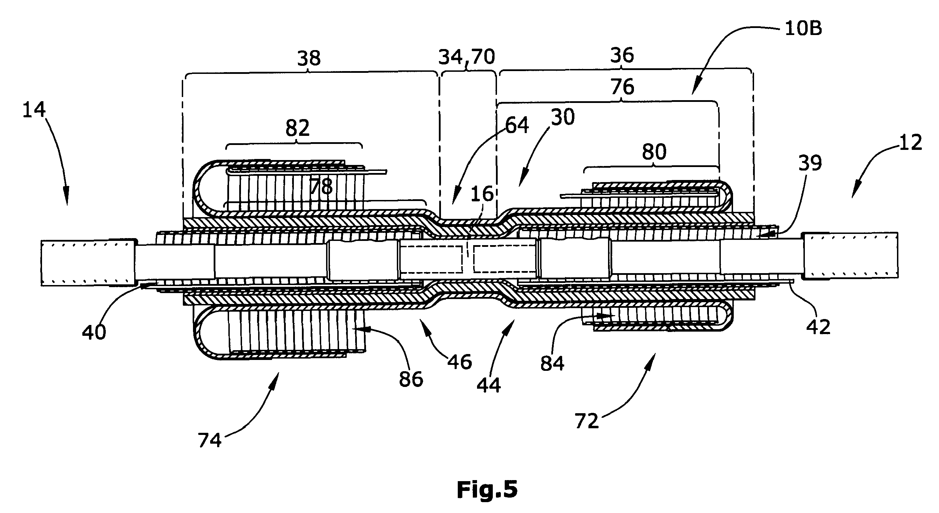

Fig. 5 shows a cross-sectional view of a further embodiment of a pre-assembled tubular terminal 10B for a cable splice. In this embodiment, the outer or second shrinkable sleeve 64 is directly shrunk onto the first shrinkable sleeve 30, except for the axial ends of the shrinkable sleeve 64 which extends beyond the inner shrinkable sleeve 30. The outer shrinkable sleeve 64 comprises a first tubular portion 70 which is shrunk onto the first tubular portion 34 of the inner shrinkable sleeve 30. Moreover, the outer shrinkable sleeve 64 comprises second and third tubular portions 72,74 each having a first subportion 76,78 and a second subportion 80,82. Within the first subportion 76,76 the outer shrinkable sleeve 64 is shrunk onto the respective second and third tubular portions 36,38 of the inner shrinkable sleeve 30. The second subportions 80,82 are folded back with respect to the first subportions 76,78 and are held in a radially expanded state by separate support cores 84, 86. The second subportions 80,82 of the outer shrinkable sleeve 64 form the end sections by which the outer shrinkable sleeve 64 extends beyond the inner shrinkable sleeve 30. The pre-assembled tubular terminal 10B according to Fig. 5 provides a rather compact configuration although the inner and outer shrinkable sleeves 30,64 are already assembled with each other. Therefore, the outer shrinkable sleeve 64, too does not require any free space on one of the cables 12,14 and on one of the sides of the cable connection.

When using the pre-assembled tubular terminal 10B, after preparation of the cables 12,14 to be connected, the second and third connectors 44,46 are connected to the first connector 16. Thereafter, the second and third tubular portions 36,38 of the inner shrinkable sleeve 30 are allowed to collapse in that the respective support cores 39,40 are removed by pulling at the ribbons 42. Thereafter, the support cores 84 and 86 are removed from the second subportions 80,82 of the outer shrinkable sleeve 64, wherein, when removing the respective support core, the respective second subportion 80,82 has to be displaced and will be displaced towards the cables 12,14 so as to complete the splice.

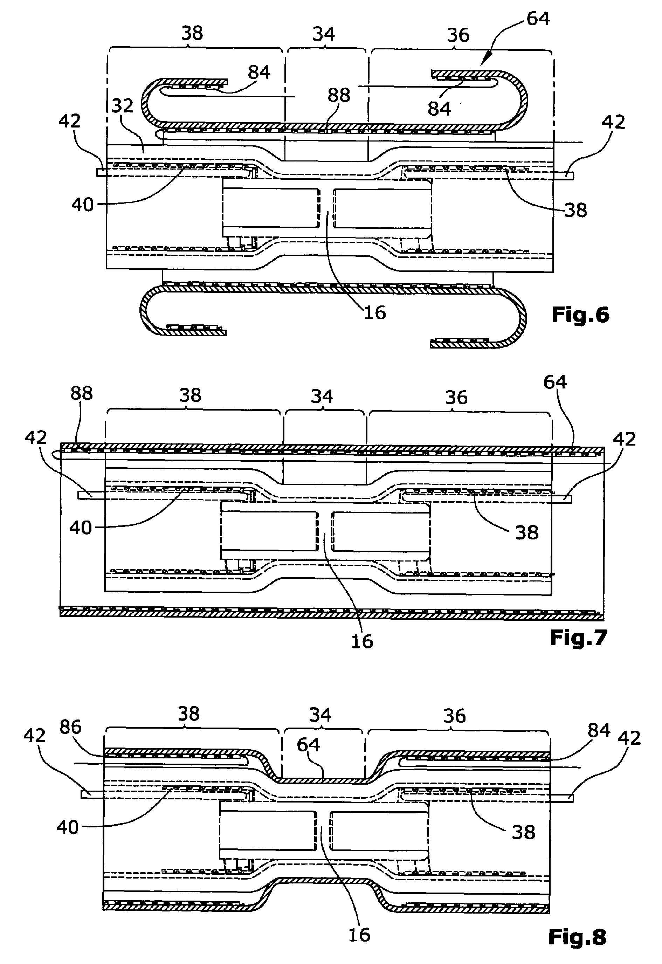

Figs. 6 to 10 show various embodiments of the arrangement of the outer shrinkable sleeve 64 relative to the inner shrinkable sleeve 30. According to Fig. 6, the outer shrinkable sleeve 64 is supported by a support element 88 supporting the first tubular portion 70 as well as the first subportions 76,78 of the outer shrinkable sleeve 64, wherein the second subportions 80,82 are supported in the same manner as shown in Fig. 5. In Fig. 6 as well as in Figs. 7 to 10, the individual support cores and respective portions of the second shrinkable sleeve 64 are shown only schematically.

According to Fig. 8, the outer shrinkable sleeve 64 is designed as a straight tube without its axial ends folded back. Along its overall axial length the outer shrinkable sleeve 64 is supported by the support core 88.

According to the embodiment of Fig. 8, the outer shrinkable sleeve 64 is shrunk down onto and supported by the first shrinkable sleeve 30 only in its first tubular portion 70. The second and third tubular portions of the second shrinkable sleeve 64 are held in a radially expanded state by support cores 84,86 which extend beyond the ends of the inner shrinkable sleeve 30.

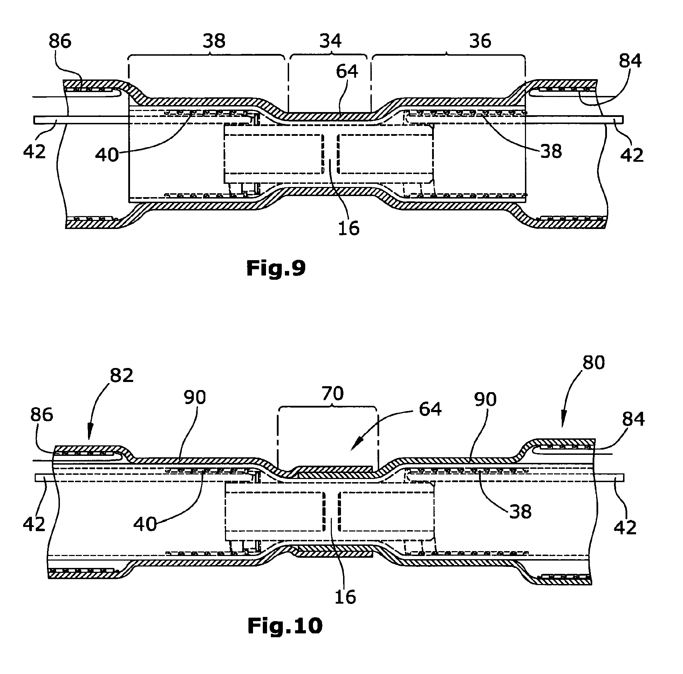

In Fig. 9, the outer shrinkable sleeve 64 is supported by the inner shrinkable sleeve 30 within its first, second, and third tubular portions 34,36,38, while the second subportions 80,82 of the second shrinkable sleeve 64 extend beyond both sides of the inner shrinkable sleeve 30 and are supported by the support cores 84,86.

Finally, in Fig. 10, a further alternative of the outer shrinkable sleeve 64 is shown. In this embodiment the outer shrinkable sleeve 64 comprises two sleeve portions 90 which overlap each other within its first tubular portions 70, and are supported by the second and third tubular portions of the inner shrinkable sleeve 30, and are supported by support cores 84,86 within the second subportions 80,82 in which the outer shrinkable sleeve 64 extends beyond the ends of the inner shrinkable sleeve 30.

It is to be noted here that several different arrangements of the inner and outer shrinkable sleeves 30,64 are possible. The examples shown shall not have a limiting aspect. In particular, it is to be noted that an overlapping configuration of two sleeve portions may also be used for the inner shrinkable sleeve 30.

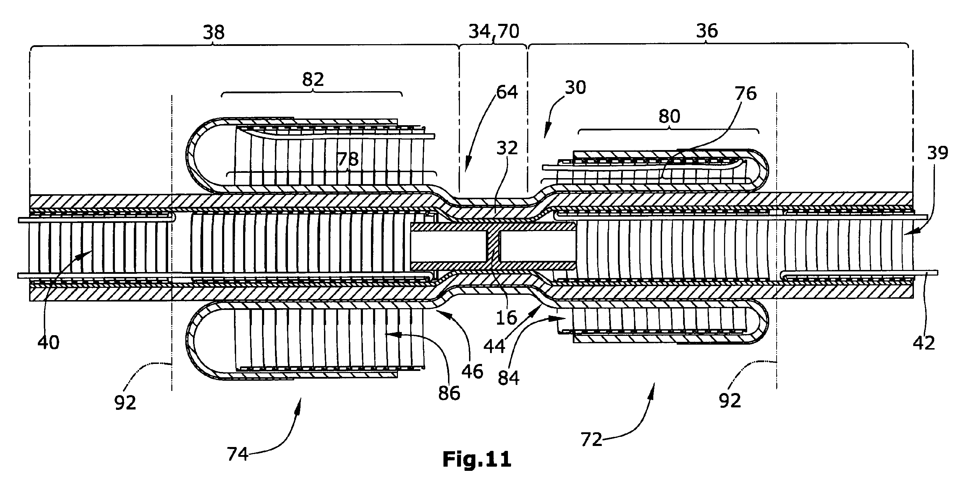

Fig. 11 shows another relative arrangement of the two shrinkable sleeves 30 and 64 which are held in radially expanded states. The embodiment of Fig. 11 comprises a combination of the features of the pre-assembled tubular terminal 10A of Fig. 4 and the features of the outer shrinkable sleeve 64 as shown in Fig. 5. In particular, the planes 92 of separation between the two core elements 39',39" and 40',40", respectively, substantially coincide with the plane in which the second subportions 80,82 of the outer shrinkable sleeve 64 are folded back. In particular, as shown in Fig. 11, the second shrinkable sleeve 64 in its state prior to its application does not extend beyond the planes 92. Accordingly, the pre-assembled tubular terminal of Fig. 11 provides a rather compact design with the end portions of the inner shrinkable sleeve 30 extending beyond the planes 92 being bendable, which facilitates insertion of the cables into the radially expanded ends of the inner shrinkable sleeve 30.

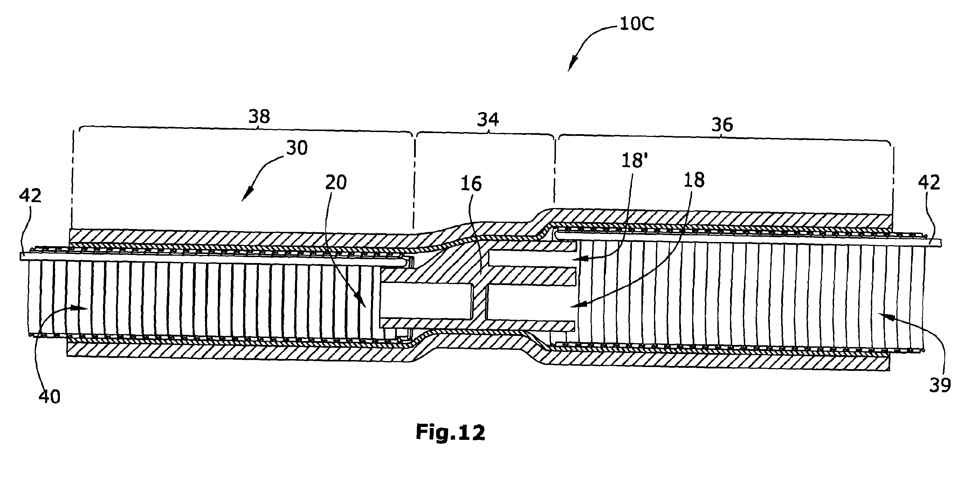

Fig. 12 shows an embodiment of a pre-assembled tubular terminal 10C to be used for a branch. The first connector 16 comprises three terminal ends 18,20,18', wherein two terminal ends 18,18' are located at the one end of the first connector 16, while the third terminal end 20 is arranged at the other end of the first connector 16. The shrinkable sleeve 30 is fixedly arranged and connected to the first connector 16 within the first tubular portion 34 and extends beyond the first connector 16 within its second and third tubular portions 36,38. Within these portions the shrinkable sleeve 30 is held in a radial expanded state by means of the support cores 39,40. Accordingly, the two adjacent terminal ends 18,18' are surrounded by one and the same support core 39. As known to those skilled in the art, an adaptor (not shown) is arranged between and around the two cables to be inserted through the support core 39 into the terminal ends 18,18'. Thereafter, the support core 39 can be removed by pulling the ribbon 42 out of the second tubular portion 36 of the shrinkable sleeve 30 so that the second tubular portion 36 is shrunk down onto the cables including their adapter. Examples for cable branches can be found in DE-C-198 17 219 and WO-A-99/21259.

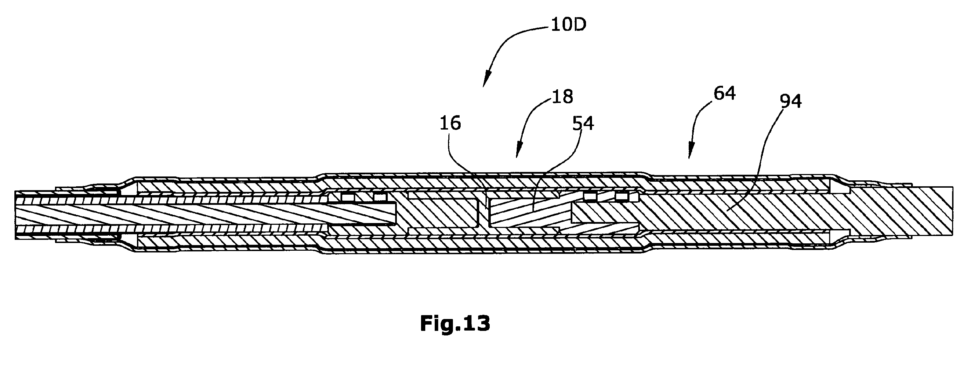

In Fig. 13 an embodiment of a pre-assembled tubular terminal 10D for use in a cable stop end application is shown. The overall configuration of the pre-assembled tubular terminal 10D is identical to that shown in Fig. 1. However, in Fig. 13 a dielectric stop end element 94 is inserted in the second connector 44 which in turn is inserted into the terminal end 18 of the first connector 16. In Fig. 13 the pre-assembled tubular terminal 10D in its fully mounted condition, including the outer shrinkable sleeve 64 is shown.

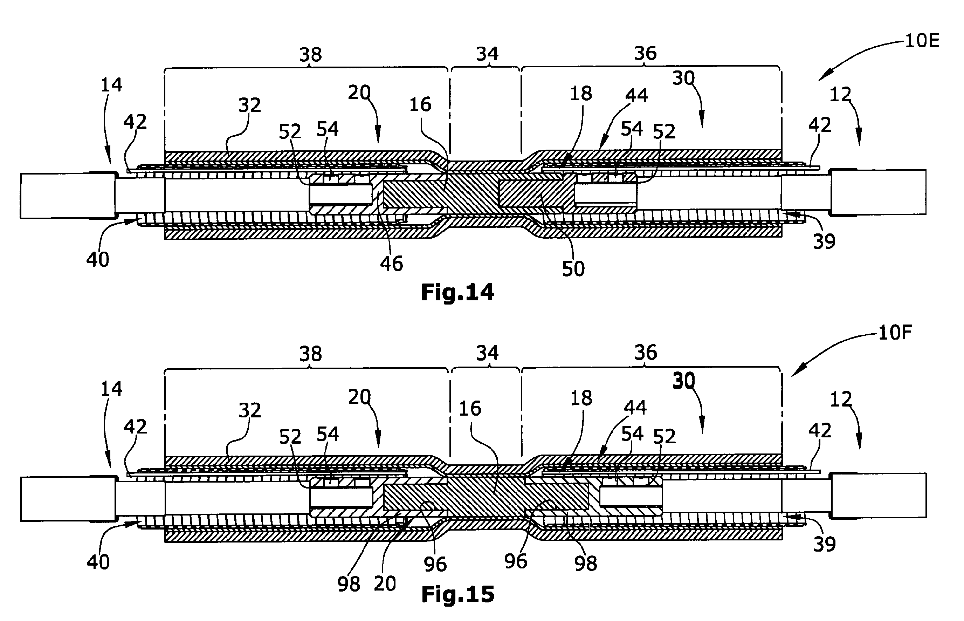

Fig. 14 shows an example of a pre-assembled tubular terminal 10E which is similar to that of Fig. 1, except for the design of the connectors 16,44,46. In the embodiment of Fig. 14, the first connector 16 is provided with a socket terminal end 18 and a plug terminal end 20. Accordingly, the second connector 44 comprises a plug 50, while the third connector 46 includes a socket for receiving the plug terminal end of the first connector 16. The second connector 44 as well the third connector 46 both comprise receiving spaces 52 for receiving the conductors 48 of two cables 12,14 to be connected. As an alternative, as shown in Fig. 13, one of the cables can be replaced by a stop end element if the pre-assembled tubular terminal 10E is used in a stop end application.

Fig. 15 shows a pre-assembled tubular terminal 10F having a first connector 16 to which the shrinkable sleeve 30 is fixedly attached. Accordingly, the configuration of the pre-assembled tubular terminal 10F is similar to that of Fig. 1, except for the design of the connectors 16,44, and 46. Namely, in Fig. 15 the first connector 16 comprises two plugs defining its terminal ends 18,20. Therefore, the second and third connectors 44,46 comprise receiving spaces 96 and sockets 98 for receiving the plugs of the first connector 16.

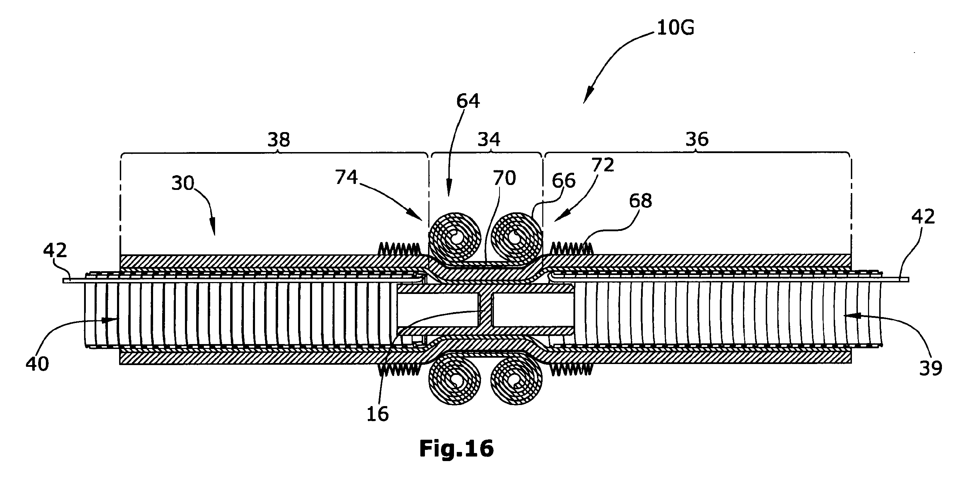

Another embodiment of a pre-assembled tubular terminal 10G is shown in Fig. 16. In this embodiment the dielectric layer 66 of the second shrinkable sleeve 64 is wound up in its second and third tubular portions 72,74 so as to be arranged within the first tubular portion 34 of the first shrinkable sleeve 30. The widening transitions sections between the first tubular portion 34 and each of the second and third tubular portions 36,38 of the first shrinkable sleeve 30 help to prevent unwinding of the second and third tubular portions 72,74 of the second shrinkable sleeve 64 from inadvertently unwinding. The metallic screen sleeve 68 underneath the dielectric layer 66 of the second shrinkable sleeve 64 extends between the first tubular portions 34 and 70 of the first and second shrinkable sleeves 30,64, respectively, and is gathered up in its remaining portions arranged at both sides of the two wound up tubular portions 72 and 74 as shown in Fig. 16.

For applying the tubular terminal 10G according to Fig. 16, the two cables are first inserted into the support cores 39 and 40 so that the second connectors attached to the cables will make electrical contact with the first connector 16. Thereafter or before the metallic screen sleeve 68 is axially stretched so as to cover the second and third tubular portions 36,38 of the first shrinkable sleeve 30 as well as to extend beyond the axial ends of the first shrinkable sleeve 30. Thereafter, the ribbons 42 are pulled out so that the first tubular sleeve 30 in its second and third tubular portions 36,38 successively will shrink down on the cables. Simultaneously with this process the two wound up second and third tubular portions 72 and 74 of the second shrinkable sleeve 64 will unwind automatically due to the internal tension of the material of the dielectric layer 66. This unwinding process can be controlled manually by holding the rolls or by selectively applying and removing stop elements (not shown) which prevent the rolls from inadvertently unwinding.

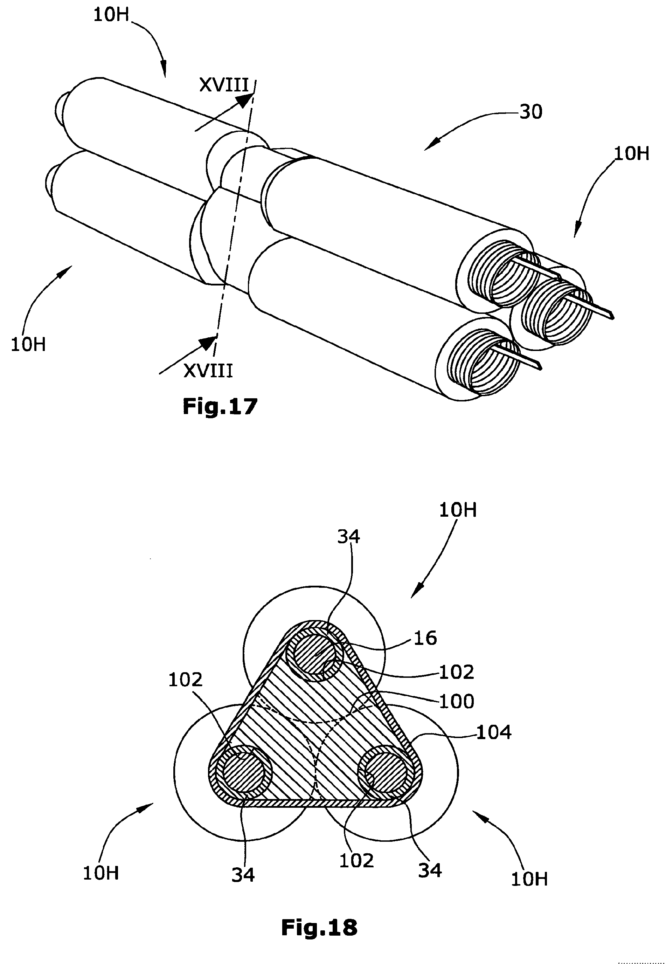

In Figs. 17 and 18 an arrangement of at least three tubular terminals 10H is shown. The tubular terminals 10H can be identical to those shown in Figs. 1, 4, 14, or 15. This arrangement of at least three tubular terminals 10H can be used for a three-phase power cable arrangement. As shown in Fig. 18, within their narrowed middle portions where the first shrinkable sleeves 30 of the three tubular terminals 10H are shrunk down onto the respective first connectors 16, the three tubular terminals 10H are connected and positioned by means of a positioning element 100 having three outwardly extending receiving portions 102 for receiving the tubular terminals 10H within the first tubular portions 34 of the first shrinkable sleeves 30. The three tubular terminals 10H are arranged close to each other and contact each other within the second and third tubular portions of their shrinkable sleeves 30. Accordingly, the three tubular terminals 10H are arranged in a triangular-shaped manner. A sleeve 104 of tape surrounds the positioning element 100 as well as the first tubular portions 34 of the shrinkable sleeve 30 of the three tubular terminals 10H so that the three tubular terminals 10H are fixedly arranged. Due to the pre-assembled state of the three tubular terminals 10H it is possible to arrange them in the manner shown in Figs. 17 and 18 so as to connect the power cables of a three-phase grit or utility network the three-phase cables can be arranged close to each other and only a little space is necessary around the three-phase cables when applying the tubular terminal arrangement of Figs. 17 and 18.

Although the invention has been described and illustrated with reference to specific illustrative embodiments thereof, it is not intended that the invention be limited to those illustrative embodiments. Those skilled in the art will recognize that variations and modifications can be made without departing from the true scope of the invention as defined by the claims that follow. It is therefore intended to include within the invention all such variations and modifications as fall within the scope of the appended claims and equivalents thereof.

## Claims

1. A tubular terminal for a medium or high voltage cable, comprising
- a first connector (16) having at least one terminal end (18;20) for connecting to at least one mating second connector (44) adapted to be connected to a cable (12;14) and to be engaged with the first connector (16) for making electrical contact therewith upon connection of the second connector (44) to the at least one terminal end (18;20) of the first connector (16), and
- a shrinkable sleeve (30) having a first tubular portion (34) and a second tubular portion (36) extending from the first tubular portion (34),
- wherein the shrinkable sleeve (30) comprises at least one layer (32) of electrically insulating material and at least one layer (33) of electrically conductive or electrically semiconductive material extending fully or partially along the axial length of the shrinkable sleeve (30), and
- wherein the second tubular portion (36) of the shrinkable sleeve (30) is adapted to extend beyond the at least one terminal end (18;20) of the first connector (16) for covering a mating second connector (44) and cable (12;14) attached thereto when the second connector (44) is connected to the at least one terminal end (18;20) of the first connector (16),
**characterized in that**
- the first connector (16) and the shrinkable sleeve (30) are pre-assembled **in that** the first tubular portion (34) of the shrinkable sleeve (30) is shrunk down onto and fixedly arranged around the first connector (16).

2. The tubular terminal according to claim 1, wherein the shrinkable sleeve (30) comprises cold shrinkable material.

3. The tubular terminal according to claim 2, wherein the second tubular portion (36) of the shrinkable sleeve (30) is held in a radially expanded state by a support (39;40) removable from the second tubular portion (36).

4. The tubular terminal according to claim 3, wherein the support comprises at least two support elements (39',39";40',40") separated from or connected to each other and arranged adjacent to each other.

5. The tubular terminal according to claim 3 or 4, wherein the support (39;40) comprises at least one core inserted into the second tubular portion (36) of the shrinkable sleeve (30) and removable out of the second tubular portion (36).

6. The tubular terminal according to claim 5, wherein the core comprises a helically wound ribbon (42) wherein the ribbon (42) at an axial end of the core proximal the terminal end (18;20) of the first connector (16) is adapted to be removed from the second tubular portion (36) of the shrinkable sleeve (30) by tearing the ribbon (42) out of an axial end of the core facing away from the terminal end (18;20) of the first connector (16) thereby separating the ribbon (42) from the remainder of the core winding by winding.

7. The tubular terminal according to claim 5 and 6, wherein at least two cores are arranged adjacent to each other within the second tubular portion (36) of the shrinkable sleeve (30).

8. The tubular terminal according to claim 7, wherein the at least two cores have different diameters.

9. The tubular terminal according to any one of claims 1 to 8, wherein the first connector (16) comprises at least one further terminal end (18') for connecting to at least one mating third connector (46) and wherein the shrinkable sleeve (30) comprises a third tubular portion (38) extending from its first tubular portion (34) and adapted to extend beyond the at least one further terminal end (18') of the first connector (16) for covering a mating third connector (46) and cable or insulator attached thereto, when the third connector (46) is connected to the at least one further terminal end (18') of the first connector (16).

10. The tubular terminal according to claim 9, wherein the first connector (16) comprises at least two further terminal ends, wherein one terminal end is arranged at one end of the first connector (16) and two terminal ends are arranged at another end of the first connector (16), and wherein the third tubular portion extends beyond the other end of the first connector (16).

11. The tubular terminal according to any one of claims 1 to 10, wherein the first connector (16) comprises at least two axial sections of different cross sections and/or different diameters and/or different inner diameters at its terminal end.

12. The tubular terminal according to any one of claims 1 to 11, wherein the first and second tubular portions (34,36) of the shrinkable sleeve (30) have sections of different diameters.

13. The tubular terminal according to any one of claims 1 to 12, wherein the at least one second connector (44) comprises a receiving space for receiving a conductor of a cable (12;14) to be fixedly connected within the receiving space.

14. The tubular terminal according to any one of claims 1 to 13, wherein the shrinkable sleeve is a first shrinkable sleeve (30) and wherein a second shrinkable sleeve (64) is arranged around the first shrinkable sleeve (30), the second shrinkable sleeve (64) comprising first and second tubular portions (70,72), wherein the first tubular portion (70) of the second shrinkable sleeve (64) is arranged around the first tubular portion (34) of the first shrinkable sleeve (30) and wherein the second tubular portion (70) of the second shrinkable sleeve (64) is adapted to be extended beyond the at least one terminal end (18;20) of the first connector (16) for covering the second tubular portion (36) of the first shrinkable sleeve (30) and an outer jacket of the cable (12;14).

15. The tubular terminal according to claim 14, wherein the second tubular portion (70) of the second shrinkable sleeve (64) is held in a radially expanded state by a support removable from the second tubular portion (70).

16. The tubular terminal according to claim 15, wherein the support comprises a core inserted into the second tubular portion (70) of the second shrinkable sleeve (64) and removable out of the second tubular portion (70).

17. The tubular terminal according to claim 15 or 16, wherein the second tubular portion (70) of the second shrinkable sleeve (64) comprises a first subportion (76) located adjacent the first connector (16) and a second subportion (80) located adjacent the first subportion (76) wherein the first subportion (76) is arranged on the second tubular portion (34) of the first shrinkable sleeve (30) and the second subportion (80) extends around the first subportion (76) and wherein the second subportion (80) is held in a radially expanded state by a support (84) removable from the second subportion (80).

18. The tubular terminal according to any one of claims 15 to 17, wherein the support (84) for the second subportion (78) of the second tubular portion (70) of the second shrinkable sleeve (64) comprises a core comprising a helically wound ribbon wherein the ribbon at an axial end of the core adjacent the first subportion (76) is adapted to be removed from the second subportion (80) by tearing the ribbon out of an axial end of the core facing towards the terminal end (18;20) of the first connector (16) thereby separating the ribbon from the remainder of the core winding by winding.

19. The tubular terminal according to claims 9 and 15 or claims 9 and 15 and any one of the preceding claims depending on claim 9 or 15, wherein the second shrinkable sleeve (64) comprises a third tubular portion (74) held in a radially expanded state by a support (86) removable from the third tubular portion (74).

20. The tubular terminal according to claim 19, wherein the third tubular portion (74) of the second shrinkable sleeve (64) comprises a first subportion (78) located adjacent the first connector (16) and a second subportion (82) located adjacent the first subportion (78) wherein the first subportion (78) is arranged on the third tubular portion (36) of the first shrinkable sleeve (30) and the second subportion (82) extends around the first subportion (78) and wherein the second subportion (82) is held in a radially expanded state by a support (86) removable from the second subportion (82).

21. The tubular terminal according to claim 20, wherein the support (86) for the second subportion (82) of the third tubular portion (74) of the second shrinkable sleeve (64) comprises a core comprising a helically wound ribbon wherein the ribbon at an axial end of the core adjacent the first subportion (78) is adapted to be removed from the second subportion (82) by tearing the ribbon out of an axial end of the core facing towards the terminal end (18;20) of the first connector (16) thereby separating the ribbon from the remainder of the core winding by winding.

22. The tubular terminal according to any one of claims 1 to 13, wherein the shrinkable sleeve is a first shrinkable sleeve (30) and wherein a second shrinkable sleeve (64) is arranged around the first tubular portion (34) of the first shrinkable sleeve (30), the second shrinkable sleeve (64) comprises a first tubular portion (70) arranged around the first tubular portion (34) of the first tubular sleeve (30) and a second tubular portion (72) wound up as a roll extending circumferentially around the first tubular portion (34) of the first shrinkable sleeve (30) and/or its second tubular portion (36).

23. The tubular terminal according to claims 9 and 22, or claims 9, 22 and anyone of the preceding claims depending on claim 9, wherein the second shrinkable sleeve (64) comprises a third tubular portion (74) wound up as a roll extending circumferentially around the first tubular portion (34) of the first shrinkable sleeve (30) and/or its third tubular portion (38).

24. The tubular terminal according to any one of claims 14 to 23, wherein the first tubular portion (70) of the second shrinkable sleeve (64) is fixedly arranged and, in particular, shrunk down onto the first tubular portion (70) of the first shrinkable sleeve (30).

25. The tubular terminal according to any one of claims 14 to 24, wherein the second shrinkable sleeve (64) comprises cold shrinkable material.

26. The tubular terminal according to any one of claims 1 to 25, wherein the shrinkable sleeve (30) or the first shrinkable sleeve (30) and/or the second shrinkable sleeve (64) each comprises two sleeve portions overlapping each other on or around the first connector (16) or the first tubular portion (34) of the shrinkable sleeve (30) or first shrinkable sleeve (30), respectively.

27. The tubular terminal according to any one of claims 1 to 26, wherein the second shrinkable sleeve (64) comprises a multi-layer shrinkable sleeve having at least one layer of electrically insulating material and at least one layer of electrically conductive or electrically semiconductive material extending fully or partially along the axial length of the sleeve (64).

28. The tubular terminal according to any one of claims 1 to 27, wherein the first connector (16) at its at least one terminal end (18;20) comprises a connector socket having a receiving space and wherein the second connector (44) comprises a connector plug to be inserted into the receiving space of the connector socket for electrical connection to the connector socket.

29. The tubular terminal according to claim 28, wherein the connector socket has at least one receiving space at each of its terminal ends for receiving a respective connector plug.

30. The tubular terminal according to any one of claims 1 to 27, wherein the first connector comprises a connector plug at its at least one terminal end (18;20) and wherein the second connector comprises a connector socket having a receiving space for receiving the connector plug for electrical connection to the connector plug of the first connector.

31. The tubular terminal according to claim 30, wherein the first connector comprises at least one connector plug at each of its terminal ends.

32. The tubular terminal according to any one of claims 1 to 27, wherein the first connector comprises at least two terminal ends with one terminal end comprising a connector socket having a receiving space and the other terminal end comprising a connector plug and wherein mating second and third connectors are provided with the second connector comprising a connector plug to be inserted into the receiving space at the one terminal end of the first connector and the third connector comprises a connector socket having a receiving space for receiving the connector plug at the other terminal end of the first connector.

33. A arrangement for connecting medium or high voltage cables, comprising at least three tubular terminals according to any one of the preceding claims, wherein two tubular terminals are arranged side-by-side and a third tubular terminal is arranged above and between the two tubular terminals, wherein a positioning element (100) having outwardly facing receiving portions (102) for receiving the first tubular portions (34) of the shrinkable sleeves (30) of the at least three tubular terminals is arranged therebetween.

34. The arrangement according to claim 33, wherein a sleeve or tape (104) encompasses the at least three tubular terminals at the first tubular portions (34) of the shrinkable sleeves (30).

35. Kit for connecting medium or high voltage cables, comprising
- a tubular terminal according to any one of claims 1 to 32, and
- a second shrinkable sleeve (64) for covering the first tubular sleeve (30) and the outer jackets of the cables (12,14) to be connected by the tubular terminal.

## Patentansprüche

1. Schlauchförmiger Anschluss für ein Mittel- oder Hochspannungskabel, umfassend
- ein erstes Verbindungsstück (16) mit mindestens einem Anschlussende (18; 20) zum Verbinden mit mindestens einem dazu passenden zweiten Verbindungsstück (44), das dazu ausgelegt ist, mit einem Kabel (12; 14) verbunden zu sein und mit dem ersten Verbindungsstück (16) zur Herstellung elektrischen Kontakts damit bei Verbindung des zweiten Verbindungsstücks (44) mit dem mindestens einen Anschlussende (18; 20) des ersten Verbindungsstücks (16) in Eingriff zu stehen, und
- eine Schrumpfmuffe (30) mit einem ersten schlauchförmigen Abschnitt (34) und einem zweiten schlauchförmigen Abschnitt (36), der sich vom ersten schlauchförmigen Abschnitt (34) erstreckt,
- wobei die Schrumpfmuffe (30) mindestens eine Schicht (32) elektrisch isolierenden Materials und mindestens eine Schicht (33) elektrisch leitfähigen oder elektrisch halbleitfähigen Materials umfasst, das sich ganz oder teilweise die Axiallänge der Schrumpfmuffe (30) entlang erstreckt, und
- wobei der zweite schlauchförmige Abschnitt (36) der Schrumpfmuffe (30) dazu ausgelegt ist, sich über das mindestens eine Anschlussende (18; 20) des ersten Verbindungsstücks (16) zu erstrecken, um ein passendes zweites Verbindungsstück (44) und das daran festgemachte Kabel (12; 14) zu überdecken, wenn das zweite Verbindungsstück (44) mit dem mindestens einen Anschlussende (18; 20) des ersten Verbindungsstücks (16) verbunden ist,
**dadurch gekennzeichnet, dass**
- das erste Verbindungsstück (16) und die Schrumpfmuffe (30) vormontiert sind, indem der erste schlauchförmige Abschnitt (34) der Schrumpfmuffe (30) auf das erste Verbindungsstück (16) aufgeschrumpft und darum herum fest angebracht ist.

2. Schlauchförmiger Anschluss nach Anspruch 1, wobei die Schrumpfmuffe (30) kaltschrumpfbares Material umfasst.

3. Schlauchförmiger Anschluss nach Anspruch 2, wobei der zweite schlauchförmige Abschnitt (36) der Schrumpfmuffe (30) in einem radial expandierten Zustand von einem von dem zweiten schlauchförmigen Abschnitt (36) entfernbaren Träger (39; 40) gehalten wird.

4. Schlauchförmiger Anschluss nach Anspruch 3, wobei der Träger mindestens zwei Trägerelemente (39', 39''; 40', 40'') umfasst, die voneinander getrennt oder miteinander verbunden und nebeneinander angeordnet sind.

5. Schlauchförmiger Anschluss nach Anspruch 3 oder 4, wobei der Träger (39; 40) mindestens einen Kern, der in den zweiten schlauchförmigen Abschnitt (36) der Schrumpfmuffe (30) eingesteckt und aus dem zweiten schlauchförmigen Abschnitt (36) entfernbar ist, umfasst.

6. Schlauchförmiger Anschluss nach Anspruch 5, wobei der Kern ein spiralförmig gewickeltes Band (42) umfasst, wobei das Band (42) an einem Axialende des Kerns proximal zum Anschlussende (18; 20) des ersten Verbindungsstücks (16) dazu ausgelegt ist, von dem zweiten schlauchförmigen Abschnitt (36) der Schrumpfmuffe (30) entfernt zu werden, indem das Band (42) aus einem Axialende des Kerns, das vom Anschlussende (18; 20) des ersten Verbindungsstücks (16) abgewandt ist, gerissen wird, wodurch das Band (42) vom Rest des Kerns Wicklung um Wicklung getrennt wird.

7. Schlauchförmiger Anschluss nach Anspruch 5 und 6, wobei mindestens zwei Kerne nebeneinander in dem zweiten schlauchförmigen Abschnitt (36) der Schrumpfmuffe (30) angeordnet sind.

8. Schlauchförmiger Anschluss nach Anspruch 7, wobei die mindestens zwei Kerne unterschiedliche Durchmesser aufweisen.

9. Schlauchförmiger Anschluss nach einem der Ansprüche 1 bis 8, wobei das erste Verbindungsstück (16) mindestens ein weiteres Anschlussende (18') zur Verbindung mit mindestens einem dazu passenden dritten Verbindungsstück (46) umfasst und wobei die Schrumpfmuffe (30) einen dritten schlauchförmigen Abschnitt (38) umfasst, der sich von ihrem ersten schlauchförmigen Abschnitt (34) aus erstreckt und dazu ausgelegt ist, sich über das mindestens eine weitere Anschlussende (18') des ersten Verbindungsstücks (16) hinaus zu erstrecken, um ein passendes drittes Verbindungsstück (46) und das daran festgemachte Kabel oder den daran festgemachten Isolator zu überdecken, wenn das dritte Verbindungsstück (46) mit dem mindestens einen weiteren Anschlussende (18') des ersten Verbindungsstücks (16) verbunden ist.

10. Schlauchförmiger Anschluss nach Anspruch 9, wobei das erste Verbindungsstück (16) mindestens zwei weitere Anschlussenden umfasst, wobei ein Anschlussende an einem Ende des ersten Verbindungsstücks (16) angeordnet ist und zwei Anschlussenden an einem anderen Ende des ersten Verbindungsstücks (16) angeordnet sind, und wobei sich der dritte schlauchförmige Abschnitt über das andere Ende des ersten Verbindungsstücks (16) hinaus erstreckt.

11. Schlauchförmiger Anschluss nach einem der Ansprüche 1 bis 10, wobei das erste Verbindungsstück (16) mindestens zwei Axialbereiche mit unterschiedlichen Querschnitten und/oder unterschiedlichen Durchmessern und/oder unterschiedlichen Innendurchmessern an seinem Anschlussende umfasst.

12. Schlauchförmiger Anschluss nach einem der Ansprüche 1 bis 11, wobei der erste und zweite schlauchförmige Abschnitt (34, 36) der Schrumpfmuffe (30) Bereiche mit unterschiedlichen Durchmessern aufweisen.

13. Schlauchförmiger Anschluss nach einem der Ansprüche 1 bis 12, wobei das mindestens eine zweite Verbindungsstück (44) einen Aufnahmeraum zur Aufnahme eines Leiters eines Kabels (12; 14) umfasst, das fest in dem Aufnahmeraum verbunden werden soll.

14. Schlauchförmiger Anschluss nach einem der Ansprüche 1 bis 13, wobei die Schrumpfmuffe eine erste Schrumpfmuffe (30) ist und wobei eine zweite Schrumpfmuffe (64) um die erste Schrumpfmuffe (30) herum angeordnet ist, wobei die zweite Schrumpfmuffe (64) einen ersten und zweiten schlauchförmigen Abschnitt (70, 72) umfasst, wobei der erste schlauchförmige Abschnitt (70) der zweiten Schrumpfmuffe (64) um den ersten schlauchförmigen Abschnitt (34) der ersten Schrumpfmuffe (30) herum angeordnet ist und wobei der zweite schlauchförmige Abschnitt (72) der zweiten Schrumpfmuffe (64) dazu ausgelegt ist, über das mindestens eine Anschlussende (18; 20) des ersten Verbindungsstücks (16) hinaus erweitert zu werden, um den zweiten schlauchförmigen Abschnitt (36) der ersten Schrumpfmuffe (30) und einen Außenmantel des Kabels (12; 14) zu überdecken.

15. Schlauchförmiger Anschluss nach Anspruch 14, wobei der zweite schlauchförmige Abschnitt (70) der zweiten Schrumpfmuffe (64) in einem radial expandierten Zustand von einem von dem zweiten schlauchförmigen Abschnitt (70) entfernbaren Träger (39; 40) gehalten wird.

16. Schlauchförmiger Anschluss nach Anspruch 15, wobei der Träger einen Kern, der in den zweiten schlauchförmigen Abschnitt (70) der zweiten Schrumpfmuffe (64) eingesteckt und aus dem zweiten schlauchförmigen Abschnitt (70) entfernbar ist, umfasst.

17. Schlauchförmiger Anschluss nach Anspruch 15 oder 16, wobei der zweite schlauchförmige Abschnitt (70) der zweiten Schrumpfmuffe (64) einen ersten Teilabschnitt (76), der sich neben dem ersten Verbindungsstück (16) befindet, und einen zweiten Teilabschnitt (80), der sich neben dem ersten Teilabschnitt (76) befindet, umfasst, wobei der erste Teilabschnitt (76) auf dem zweiten schlauchförmigen Abschnitt (34) der ersten Schrumpfmuffe (30) angeordnet ist und sich der zweite Teilabschnitt (80) um den ersten Teilabschnitt (76) herum erstreckt und wobei der zweite Teilabschnitt (80) in einem radial expandierten Zustand von einem von dem zweiten Teilabschnitt (80) entfernbaren Träger (84) gehalten wird.

18. Schlauchförmiger Anschluss nach einem der Ansprüche 15 bis 17, wobei der Träger (84) für den zweiten Teilabschnitt (80) des zweiten schlauchförmigen Abschnitts (70) der zweiten Schrumpfmuffe (64) einen Kern umfasst, der ein spiralförmig gewickeltes Band umfasst, wobei das Band an einem Axialende des Kerns neben dem ersten Teilabschnitt (76) dazu ausgelegt ist, von dem zweiten Teilabschnitt (80) entfernt zu werden, indem das Band aus einem Axialende des Kerns, das dem Anschlussende (18; 20) des ersten Verbindungsstücks (16) zugewandt ist, gerissen wird, wodurch das Band vom Rest des Kerns Wicklung um Wicklung getrennt wird.

19. Schlauchförmiger Anschluss nach den Ansprüche n 9 und 15 oder Ansprüchen 9 und 15 und einem der vorhergehenden Ansprüche, die von Anspruch 9 oder 15 abhängig sind, wobei die zweite Schrumpfmuffe (64) einen dritten schlauchförmigen Abschnitt (74) umfasst, der in einem radial expandierten Zustand von einem von dem dritten Teilabschnitt (74) entfernbaren Träger (86) gehalten wird.

20. Schlauchförmiger Anschluss nach Anspruch 19, wobei der dritte schlauchförmige Abschnitt (74) der zweiten Schrumpfmuffe (64) einen ersten Teilabschnitt (78), der sich neben dem ersten Verbindungsstück (16) befindet, und einen zweiten Teilabschnitt (82), der sich neben dem ersten Teilabschnitt (78) befindet, umfasst, wobei der erste Teilabschnitt (78) auf dem dritten schlauchförmigen Abschnitt (36) der ersten Schrumpfmuffe (30) angeordnet ist und sich der zweite Teilabschnitt (82) um den ersten Teilabschnitt (78) herum erstreckt und wobei der zweite Teilabschnitt (82) in einem radial expandierten Zustand von einem von dem zweiten Teilabschnitt (82) entfernbaren Träger (86) gehalten wird.

21. Schlauchförmiger Anschluss nach Anspruch 20, wobei der Träger (86) für den zweiten Teilabschnitt (82) des dritten schlauchförmigen Abschnitts (74) der zweiten Schrumpfmuffe (64) einen Kern umfasst, der ein spiralförmig gewickeltes Band umfasst, wobei das Band an einem Axialende des Kerns neben dem ersten Teilabschnitt (78) dazu ausgelegt ist, von dem zweiten Teilabschnitt (82) entfernt zu werden, indem das Band aus einem Axialende des Kerns, das dem Anschlussende (18; 20) des ersten Verbindungsstücks (16) zugewandt ist, gerissen wird, wodurch das Band vom Rest des Kerns Wicklung um Wicklung getrennt wird.

22. Schlauchförmiger Anschluss nach einem der Ansprüche 1 bis 13, wobei die Schrumpfmuffe eine erste Schrumpfmuffe (30) ist und wobei eine zweite Schrumpfmuffe (64) um den ersten schlauchförmigen Abschnitt (34) der ersten Schrumpfmuffe (30) herum angeordnet ist, die zweite Schrumpfmuffe (64) einen ersten schlauchförmigen Abschnitt (70) umfasst, der um den ersten schlauchförmigen Abschnitt (34) der ersten schlauchförmigen Muffe (30) herum angeordnet ist, und ein zweiter schlauchförmiger Abschnitt (72) zu einer Rolle gewickelt wird, die sich um den Umfang des ersten schlauchförmigen Abschnitts (34) der ersten Schrumpfmuffe (30) und/oder ihren zweiten schlauchförmigen Abschnitt (36) herum erstreckt.

23. Schlauchförmiger Anschluss nach Ansprüchen 9 und 22, oder Ansprüchen 9, 22 und einem der vorhergehenden Ansprüche, die von Anspruch 9 abhängig sind, wobei die zweite Schrumpfmuffe (64) einen dritten schlauchförmigen Abschnitt (74) umfasst, der zu einer Rolle gewickelt wird, die sich um den Umfang des ersten schlauchförmigen Abschnitts (34) der ersten Schrumpfmuffe (30) und/oder ihren dritten schlauchförmigen Abschnitt (38) herum erstreckt.

24. Schlauchförmiger Anschluss nach einem der Ansprüche 14 bis 23, wobei der erste schlauchförmige Abschnitt (70) der zweiten Schrumpfmuffe (64) fest angebracht und insbesondere auf den ersten schlauchförmigen Abschnitt (70) der ersten Schrumpfmuffe (30) aufgeschrumpft ist.

25. Schlauchförmiger Anschluss nach einem der Ansprüche 14 bis 24, wobei die zweite Schrumpfmuffe (64) kaltschrumpfbares Material umfasst.

26. Schlauchförmiger Anschluss nach einem der Ansprüche 1 bis 25, wobei die Schrumpfmuffe (30) oder die erste Schrumpfmuffe (30) und/oder die zweite Schrumpfmuffe (64) jeweils zwei Muffenabschnitte umfasst, die sich auf oder um das erste Verbindungsstück (16) oder den ersten schlauchförmigen Abschnitt (34) der Schrumpfmuffe (30) bzw. ersten Schrumpfmuffe (30) herum überlappen.

27. Schlauchförmiger Anschluss nach einem der Ansprüche 1 bis 26, wobei die zweite Schrumpfmuffe (64) eine mehrschichtige Schrumpfmuffe mit mindestens einer Schicht elektrisch isolierenden Materials und mindestens einer Schicht elektrisch leitfähigen oder elektrisch halbleitfähigen Materials umfasst, das sich ganz oder teilweise die Axiallänge der Schrumpfmuffe (64) entlang erstreckt.

28. Schlauchförmiger Anschluss nach einem der Ansprüche 1 bis 27, wobei das erste Verbindungsstück (16) an seinem mindestens einen Anschlussende (18; 20) eine Verbinderbuchse mit einem Aufnahmeraum umfasst und wobei das zweite Verbindungsstück (44) einen Verbinderstecker zum Einstecken in den Aufnahmeraum der Verbinderbuchse zur elektrischen Verbindung mit der Verbinderbuchse umfasst.

29. Schlauchförmiger Anschluss nach Anspruch 28, wobei die Verbinderbuchse mindestens einen Aufnahmeraum an jedem seiner Anschlussenden zur Aufnahme eines jeweiligen Verbindersteckers hat.

30. Schlauchförmiger Anschluss nach einem der Ansprüche 1 bis 27, wobei das erste Verbindungsstück an seinem mindestens einen Anschlussende (18; 20) einen Verbinderstecker umfasst und wobei das zweite Verbindungsstück eine Verbinderbuchse mit einem Aufnahmeraum zum Aufnehmen des Verbindersteckers zur elektrischen Verbindung mit dem Verbinderstecker des ersten Verbindungsstücks umfasst.

31. Schlauchförmiger Anschluss nach Anspruch 30, wobei das erste Verbindungsstück mindestens einen Verbinderstecker an jedem seiner Anschlussenden umfasst.

32. Schlauchförmiger Anschluss nach einem der Ansprüche 1 bis 27, wobei das erste Verbindungsstück mindestens zwei Anschlussenden (18; 20) umfasst, wobei ein Anschlussende eine Verbinderbuchse mit einem Aufnahmeraum umfasst und das andere Anschlussende einen Verbinderstecker umfasst, und wobei ein dazu passendes zweites und drittes Verbindungsstück vorgesehen sind, wobei das zweite Verbindungsstück einen Verbinderstecker zum Einstecken in den Aufnahmeraum an dem einen Anschlussende des ersten Verbindungsstücks umfasst und das dritte Verbindungsstück eine Verbinderbuchse mit einem Aufnahmeraum zum Aufnehmen des Verbindersteckers an dem anderen Anschlussende des ersten Verbindungsstücks umfasst.

33. Anordnung zur Verbindung von Mittel- oder Hochspannungskabeln, umfassend mindestens drei schlauchförmige Anschlüsse nach einem der vorhergehenden Ansprüche, wobei zwei schlauchförmige Anschlüsse Seite an Seite angeordnet sind und ein dritter schlauchförmiger Anschluss über und zwischen den zwei schlauchförmigen Anschlüssen angeordnet ist, wobei ein Positionselement (100) mit nach außen gewandten Aufnahmeabschnitten (102) zur Aufnahme der ersten schlauchförmigen Abschnitte (34) der Schrumpfmuffen (30) der mindestens drei schlauchförmigen Anschlüsse dazwischen angeordnet ist.

34. Anordnung nach Anspruch 33, wobei eine Muffe oder ein Einfassband (104) die mindestens drei schlauchförmigen Anschlüsse an den ersten schlauchförmigen Abschnitten (34) der Schrumpfmuffen (30) umhüllt.

35. Kit zur Verbindung von Mittel- oder Hochspannungskabeln, umfassend
- einen schlauchförmigen Anschluss nach einem der Ansprüche 1 bis 32, und
- eine zweite Schrumpfmuffe (64) zum Überdecken der ersten schlauchförmigen Muffe (30) und der Außenmäntel der Kabel (12, 14) zur Verbindung über den schlauchförmigen Anschluss.

## Revendications

1. Borne tubulaire pour un câble à moyenne ou à haute tension, comprenant
- un premier connecteur (16) comprenant au moins une extrémité de borne (18 ; 20) destinée à être connectée à au moins un deuxième connecteur homologue (44) conçu pour être raccordé à un câble (12 ; 14) et pour venir en prise avec le premier connecteur (16) pour établir un contact électrique avec lui lors de la connexion du deuxième connecteur (44) à l'au moins une extrémité de borne (18 ; 20) du premier connecteur (16), et
- un manchon rétractable (30) muni d'une première portion tubulaire (34) et d'une deuxième portion tubulaire (36) s'étendant depuis la première portion tubulaire (34),
- le manchon rétractable (30) comprenant au moins une couche (32) de matériau électriquement isolant et au moins une couche (33) de matériau électriquement conducteur ou électriquement semiconducteur qui s'étend entièrement ou partiellement sur la longueur axiale du manchon rétractable (30), et
- la deuxième portion tubulaire (36) du manchon rétractable (30) étant conçue pour s'étendre au-delà de l'au moins une extrémité de borne (18 ; 20) du premier connecteur (16) pour couvrir un deuxième connecteur homologue (44) et un câble (12 ; 14) fixé à celui-ci lorsque le deuxième connecteur (44) est relié à l'au moins une extrémité de borne (18 ; 20) du premier connecteur (16), **caractérisée en ce que**
- le premier connecteur (16) et le manchon rétractable (30) sont pré-assemblés de telle sorte que la première portion tubulaire (34) du manchon rétractable (30) est rétractée sur et disposée en position fixe autour du premier connecteur (16).

2. Borne tubulaire selon la revendication 1, le manchon rétractable (30) comprenant un matériau rétractable à froid.

3. Borne tubulaire selon la revendication 2, la deuxième portion tubulaire (36) du manchon rétractable (30) étant maintenue dans un état d'expansion radiale par un support (39 ; 40) amovible de la deuxième portion tubulaire (36).

4. Borne tubulaire selon la revendication 3, le support comprenant au moins deux éléments supports (39', 39'' ; 40', 40'') séparés l'un de l'autre ou reliés l'un à l'autre et disposés l'un à côté de l'autre.

5. Borne tubulaire selon la revendication 3 ou 4, le support (39 ; 40) comprenant au moins une âme insérée dans la deuxième portion tubulaire (36) du manchon rétractable (30) et pouvant être retirée de la deuxième portion tubulaire (36).

6. Borne tubulaire selon la revendication 5, l'âme comprenant un ruban (42) enroulé en spirale, le ruban (42) à une extrémité axiale de l'âme à proximité de l'extrémité de borne (18 ; 20) du premier connecteur (16) étant conçu pour être retiré de la deuxième portion tubulaire (36) du manchon rétractable (30) en arrachant le ruban (42) hors d'une extrémité axiale de l'âme qui est dos à l'extrémité de borne (18 ; 20) du premier connecteur (16), ceci séparant ainsi le ruban (42) du reste de l'âme spire par spire.

7. Borne tubulaire selon la revendication 5 ou 6, au moins deux âmes étant disposées l'une à côté de l'autre à l'intérieur de la deuxième portion tubulaire (36) du manchon rétractable (30).

8. Borne tubulaire selon la revendication 7, les au moins deux âmes ayant des diamètres différents.

9. Borne tubulaire selon l'une quelconque des revendications 1 à 8, le premier connecteur (16) comprenant au moins une extrémité de borne (18') supplémentaire destinée à être raccordée à au moins un troisième connecteur (46) homologue et le manchon rétractable (30) comprenant une troisième portion tubulaire (38) qui s'étend depuis sa première portion tubulaire (34) et qui est conçue pour s'étendre au-delà de l'au moins une extrémité de borne (18') supplémentaire du premier connecteur (16) pour couvrir un troisième connecteur (46) homologue ainsi qu'un câble ou un isolant fixé à celui-ci lorsque le troisième connecteur (46) est raccordé à l'au moins une extrémité de borne (18') supplémentaire du premier connecteur (16).

10. Borne tubulaire selon la revendication 9, le premier connecteur (16) comprenant au moins deux extrémités de borne supplémentaires, une extrémité de borne étant disposée à une extrémité du premier connecteur (16) et deux extrémités de borne étant disposées à une autre extrémité du premier connecteur (16) et la troisième portion tubulaire s'étendant au-delà de l'autre extrémité du premier connecteur (16).

11. Borne tubulaire selon l'une quelconque des revendications 1 à 10, le premier connecteur (16) comprenant au moins deux sections axiales de sections transversales différentes et/ou de diamètres différents et/ou de diamètres intérieurs différents à son extrémité de borne.

12. Borne tubulaire selon l'une quelconque des revendications 1 à 11, les première et deuxième portions tubulaires (34, 36) du manchon rétractable (30) ayant des sections de diamètres différents.

13. Borne tubulaire selon l'une quelconque des revendications 1 à 12, l'au moins un deuxième connecteur (44) comprenant un espace d'accueil pour accueillir un conducteur d'un câble (12 ; 14) destiné à être raccordé de manière fixe à l'intérieur de l'espace d'accueil.

14. Borne tubulaire selon l'une quelconque des revendications 1 à 13, le manchon rétractable étant un premier manchon rétractable (30) et un deuxième manchon rétractable (64) étant disposé autour du premier manchon rétractable (30), le deuxième manchon rétractable (64) comprenant une première et une deuxième portion tubulaire (70, 72), la première portion tubulaire (70) du deuxième manchon rétractable (64) étant disposée autour de la première portion tubulaire (34) du premier manchon rétractable (30) et la deuxième portion tubulaire (70) du deuxième manchon rétractable (64) étant conçue pour s'étendre au-delà de l'au moins une extrémité de borne (18 ; 20) du premier connecteur (16) pour couvrir la deuxième portion tubulaire (36) du premier manchon rétractable (30) ainsi qu'une gaine extérieure du câble (12 ; 14).

15. Borne tubulaire selon la revendication 14, la deuxième portion tubulaire (70) du deuxième manchon rétractable (64) étant maintenue dans un état d'expansion radiale par un support pouvant être retiré de la deuxième portion tubulaire (70).

16. Borne tubulaire selon la revendication 15, le support comprenant une âme insérée dans la deuxième portion tubulaire (70) du deuxième manchon rétractable (64) et pouvant être retirée de la deuxième portion tubulaire (70).

17. Borne tubulaire selon la revendication 15 ou 16, la deuxième portion tubulaire (70) du deuxième manchon rétractable (64) comprenant une première sous-portion (76) qui se trouve à côté du premier connecteur (16) et une deuxième sous-portion (80) qui se trouve à côté de la première sous-portion (76), la première sous-portion (76) étant disposée sur la deuxième portion tubulaire (34) du premier manchon rétractable (30) et la deuxième sous-portion (80) s'étendant autour de la première sous-portion (76) et la deuxième sous-portion (80) étant maintenue dans un état d'expansion radiale par un support (84) pouvant être retiré de la deuxième sous-portion (80).

18. Borne tubulaire selon l'une quelconque des revendications 15 à 17, le support (84) de la deuxième sous-portion (78) de la deuxième portion tubulaire (70) du deuxième manchon rétractable (64) comprenant une âme comprenant un ruban enroulé en spirale, le ruban à une extrémité axiale de l'âme voisine de la première sous-portion (76) étant conçu pour être retiré de la deuxième sous-portion (80) en arrachant le ruban hors d'une extrémité axiale de l'âme qui fait face à l'extrémité de borne (18 ; 20) du premier connecteur (16), ceci séparant ainsi le ruban du reste de l'âme spire par spire.

19. Borne tubulaire selon les revendications 9 et 15 ou les revendications 9 et 15 et l'une quelconque des revendications précédentes dépendantes des revendications 9 ou 15, le deuxième manchon rétractable (64) comprenant une troisième portion tubulaire (74) maintenue dans un état d'expansion radiale par un support (86) pouvant être retiré de la troisième portion tubulaire (74).

20. Borne tubulaire selon la revendication 19, la troisième portion tubulaire (74) du deuxième manchon rétractable (64) comprenant une première sous-portion (78) qui se trouve à côté du premier connecteur (16) et une deuxième sous-portion (82) qui se trouve à côté de la première sous-portion (78), la première sous-portion (78) étant disposée sur la troisième portion tubulaire (36) du premier manchon rétractable (30) et la deuxième sous-portion (82) s'étendant autour de la première sous-portion (78) et la deuxième sous-portion (82) étant maintenue dans un état d'expansion radiale par un support (86) pouvant être retiré de la deuxième sous-portion (82).

21. Borne tubulaire selon la revendication 20, le support (86) de la deuxième sous-portion (82) de la troisième portion tubulaire (74) du deuxième manchon rétractable (64) comprenant une âme comprenant un ruban enroulé en spirale, le ruban à une extrémité axiale de l'âme voisine de la première sous-portion (78) étant conçu pour être retiré de la deuxième sous-portion (82) en arrachant le ruban hors d'une extrémité axiale de l'âme qui fait face à l'extrémité de borne (18 ; 20) du premier connecteur (16), ceci séparant ainsi le ruban du reste de l'âme spire par spire.

22. Borne tubulaire selon l'une quelconque des revendications 1 à 13, le manchon rétractable étant un premier manchon rétractable (30) et un deuxième manchon rétractable (64) étant disposé autour de la première portion tubulaire (34) du premier manchon rétractable (30), le deuxième manchon rétractable (64) comprenant une première portion tubulaire (70) disposée autour de la première portion tubulaire (34) du premier manchon rétractable (30) et une deuxième portion tubulaire (72) enroulée comme un rouleau qui s'étend dans le sens de la circonférence autour de la première portion tubulaire (34) du premier manchon rétractable (30) et/ou de sa deuxième portion tubulaire (36).

23. Borne tubulaire selon les revendications 9 et 22 ou les revendications 9, 22 et l'une quelconque des revendications précédentes dépendantes de la revendication 9, le deuxième manchon rétractable (64) comprenant une troisième portion tubulaire (74) enroulée comme un rouleau qui s'étend dans le sens de la circonférence autour de la première portion tubulaire (34) du premier manchon rétractable (30) et/ou de sa troisième portion tubulaire (38).

24. Borne tubulaire selon l'une quelconque des revendications 14 à 23, la première portion tubulaire (70) du deuxième manchon rétractable (64) étant disposée en position fixe et notamment rétractée sur la première portion tubulaire (70) du premier manchon rétractable (30).

25. Borne tubulaire selon l'une quelconque des revendications 14 à 24, le deuxième manchon rétractable (64) comprenant un matériau rétractable à froid.

26. Borne tubulaire selon l'une quelconque des revendications 1 à 25, le manchon rétractable (30) ou le premier manchon rétractable (30) et/ou le deuxième manchon rétractable (64) comprenant chacun deux portions de manchon qui se chevauchent l'une l'autre ou respectivement autour du premier connecteur (16) ou de la première portion tubulaire (34) du manchon rétractable (30) ou du premier manchon rétractable (30).

27. Borne tubulaire selon l'une quelconque des revendications 1 à 26, le deuxième manchon rétractable (64) comprenant un manchon rétractable multicouche comprenant au moins une couche de matériau électriquement isolant et au moins une couche de matériau électriquement conducteur ou électriquement semiconducteur qui s'étend entièrement ou partiellement le long de la longueur axiale du manchon (64).

28. Borne tubulaire selon l'une quelconque des revendications 1 à 27, le premier connecteur (16) à son au moins une extrémité de borne (18 ; 20) comprenant une douille de connecteur ayant un espace d'accueil et le deuxième connecteur (44) comprenant une fiche de connecteur à insérer dans l'espace d'accueil de la douille de connecteur pour réaliser la connexion électrique avec la douille de connecteur.

29. Borne tubulaire selon la revendication 28, la douille de connecteur comprenant au moins un espace d'accueil à chacune de ses extrémités de borne pour accueillir une fiche de connecteur correspondante.

30. Borne tubulaire selon l'une quelconque des revendications 1 à 27, le premier connecteur comprenant une fiche de connecteur à son au moins une extrémité de borne (18 ; 20) et le deuxième connecteur comprenant une douille de connecteur ayant un espace d'accueil pour accueillir la fiche de connecteur pour réaliser la connexion électrique avec la fiche de connecteur du premier connecteur.

31. Borne tubulaire selon la revendication 30, le premier connecteur comprenant au moins une fiche de connecteur à chacune de ses extrémités de borne.

32. Borne tubulaire selon l'une quelconque des revendications 1 à 27, le premier connecteur comprenant au moins deux extrémités de borne avec une extrémité de borne comprenant une douille de connecteur ayant un espace d'accueil et l'autre extrémité de borne comprenant une fiche de connecteur et des deuxième et troisième connecteurs homologues étant prévus avec le deuxième connecteur comprenant une fiche de connecteur à insérer dans l'espace d'accueil à l'extrémité de borne du premier connecteur et le troisième connecteur comprenant une douille de connecteur ayant un espace d'accueil pour accueillir la fiche de connecteur à l'autre extrémité de borne du premier connecteur.

33. Arrangement pour connecter des câbles à moyenne ou à haute tension, comprenant au moins trois bornes tubulaires selon l'une quelconque des revendications précédentes, deux bornes tubulaires étant disposées côte à côte et une troisième borne tubulaire étant disposée au-dessus et entre les deux bornes tubulaires, un élément de positionnement (100) muni de portions d'accueil (102) dirigées vers l'extérieur pour accueillir les premières portions tubulaires (34) des manchons rétractables (30) des au moins trois bornes tubulaires étant disposé entre elles.

34. Arrangement selon la revendication 33, un manchon ou une bande (104) enveloppant les au moins trois bornes tubulaires au niveau des premières portions tubulaires (34) des manchons rétractables (30).

35. Kit pour connecter des câbles à moyenne ou à haute tension, comprenant
- une borne tubulaire selon l'une quelconque des revendications 1 à 32 et
- un deuxième manchon rétractable (64) pour couvrir le premier manchon tubulaire (30) et les gaines extérieures des câbles (12, 14) à raccorder par la borne tubulaire.
